# FASCICULE DE BREVET EUROPEEN

(11) **EP 3 973 149 B1**
(45) Date de publication et mention de la délivrance du brevet: **22.03.2023**
(21) Numéro de dépôt: 20737518.9
(22) Date de dépôt: 19.05.2020
(51) Int. Cl.: F01D 9/04, F01D 25/24

(54) **TURBINE POUR UNE TURBOMACHINE, TELLE QU'UN TURBORÉACTEUR OU UN TURBOPROPULSEUR D'AVION**
TURBINE FÜR EINE TURBOMASCHINE, WIE ZUM BEISPIEL EIN TURBOSTRAHLTRIEBWERK ODER EIN TURBOPROPTRIEBWERK FÜR EIN FLUGZEUG
TURBINE FOR A TURBOMACHINE, FOR EXAMPLE AN AIRCRAFT TURBOREACTOR OR TURBOPROP ENGINE

(30) Priorité: 21.05.2019 FR 1905340
(43) Date de publication de la demande: 30.03.2022
(73) Titulaire: SAFRAN AIRCRAFT ENGINES, 75015 Paris (FR)
(72) Inventeur: HAYNAU, Rémy, Miled, Michel, 77550 MOISSY-CRAMAYEL (FR); GENILIER, Arnaud, Lasantha, 77550 MOISSY-CRAMAYEL (FR); CONTINI, Nicolas, 77550 MOISSY-CRAMAYEL (FR); GOOSSENS, Maria, 77550 MOISSY-CRAMAYEL (FR); SILET, Benoit, Guillaume, 77550 MOISSY-CRAMAYEL (FR)
(74) Mandataire: Ernest Gutmann - Yves Plasseraud S.A.S.
(86) Numéro de dépôt international: PCT/FR2020/050834
(87) Numéro de publication internationale: WO 2020/234542

(56) Documents cités:
- EP-A1- 3 078 814
- EP-A2- 1 533 478
- FR-A1- 2 961 556
- FR-A1- 3 061 741
- US-A1- 2009 246 012

## Description

### Domaine technique

La présente invention relève du domaine des turbines pour une turbomachine, telle qu'un turboréacteur ou un turbopropulseur.

### Technique antérieure

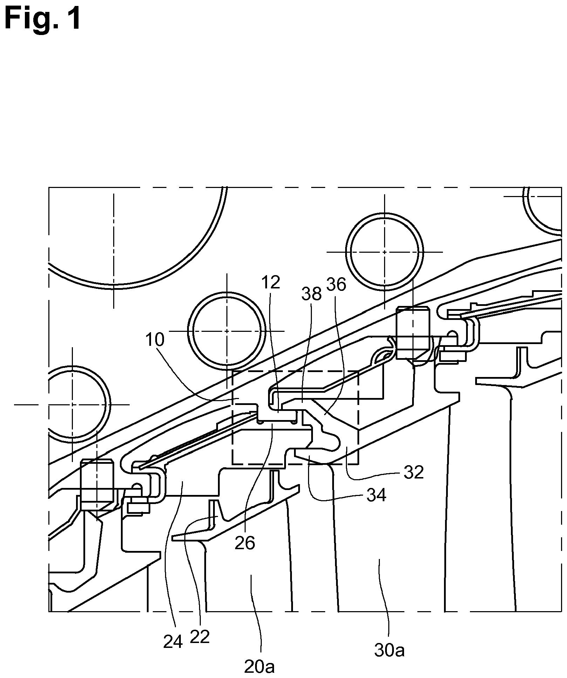

Comme représenté en figure 1, une turbine basse pression d'une turbomachine comprend des rangées annulaires d'aubes mobiles 20a disposées axialement en alternance avec des rangées annulaires d'aubes fixes 30a et entourées par un carter 10 de la turbine basse pression. Une rangée annulaire d'aubes mobiles 20a et une rangée annulaire d'aubes fixes 30a aval forment ensemble un étage de la turbine. Une rangée annulaire d'aubes fixes 30a est également appelée distributeur. Le distributeur est généralement formé d'une pluralité de secteurs agencés circonférentiellement bout-à-bout.

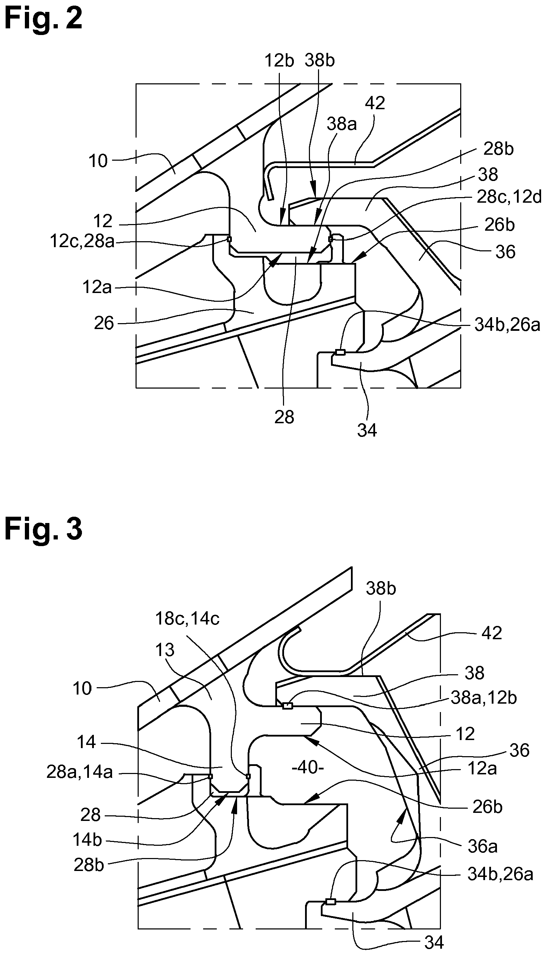

L'extrémité radialement externe de chaque rangée annulaire d'aubes mobiles 20a comprend des léchettes 22 qui coopèrent avec un matériau abradable 24 conformé de manière annulaire et porté par la face radialement interne d'un anneau 26. L'anneau est généralement formé d'une pluralité de secteurs d'anneau agencés circonférentiellement bout-à-bout. L'anneau 26 est rendu solidaire du carter 10 grâce à un moyen de support porté par le carter 10 et un moyen d'accrochage d'un distributeur aval comme cela est visible en figure 2.

Classiquement, le moyen de support comprend une paroi cylindrique 12 reliée au carter 10 et s'étendant axialement vers l'aval. La paroi cylindrique 12 présente une face annulaire radialement interne 12a et une face annulaire radialement externe 12b.

L'extrémité radialement externe de chaque rangée annulaire d'aubes fixes 30a comprend une plateforme annulaire externe 32 portant un moyen d'accrochage du distributeur. Ce moyen d'accrochage comprend un becquet annulaire interne 34 s'étendant vers l'amont depuis l'extrémité amont de la plateforme 32. Le becquet annulaire interne 34 présente notamment une face annulaire radialement externe 34b. Le moyen d'accrochage du distributeur comprend en outre une paroi tronconique 36 s'étendant vers l'amont et radialement vers l'extérieur depuis la plateforme annulaire externe 32. Le moyen d'accrochage comprend enfin un becquet annulaire externe 38 s'étendant vers l'amont depuis une extrémité radiale externe de la paroi tronconique 36. Le becquet annulaire externe 38 présente notamment une face radialement interne 38a.

La paroi cylindrique 12 du moyen de support est engagée dans une gorge annulaire 28 d'une surface radialement externe 26b de l'anneau 26. Les faces annulaires amont 28a et aval 28c de la gorge annulaire 28 forment des butées axiales sur l'extrémité amont et l'extrémité aval de la paroi cylindrique 12, permettant ainsi de bloquer axialement l'anneau 26. La face annulaire de fond 28b de la gorge annulaire 28 forme un appui radial avec la face radialement interne 12a de la paroi cylindrique 12, permettant une fixation radiale sur le carter 10. La coopération de forme entre la paroi cylindrique 12 et la gorge annulaire 28 de l'anneau 26 assure également une étanchéité en limitant une sortie d'air chaud de la veine annulaire d'air primaire.

Le distributeur est positionné par rapport au carter 10 de manière à ce que la face annulaire radialement interne 38a du becquet annulaire externe 38 du moyen d'accrochage soit en appui sur la face annulaire radialement externe 12b de la paroi cylindrique 12 du moyen de support. Le distributeur est également maintenu par rapport à l'anneau 26 par la face annulaire radialement externe 34b du becquet annulaire interne 34 du moyen d'accrochage qui est en appui sur la face radialement interne 26a de l'anneau 26. Une partie d'extrémité aval de l'anneau 26 se trouve alors engagée dans un logement annulaire s'étendant entre la face annulaire radialement externe 34b du becquet annulaire interne 34 et la face annulaire radialement interne 38a du becquet annulaire externe 38. Ce logement annulaire est ainsi délimité par la face annulaire radialement interne 38a du becquet annulaire externe 38, la face annulaire externe 34b du becquet annulaire interne 34 et une face amont 36a de la paroi tronconique 36.

Il est en outre connu les documents US 2009/246012-A1, EP 1 533 478-A2, FR 2 961 556-A1, EP 3 078 814-A1 et FR 3 061 741-A1.

Lors de l'utilisation de la turbine, les gaz chauds sous pression sortant de la chambre de combustion induisent une augmentation de la température des aubes fixes 30a, des aubes mobiles 20a et du matériau abradable 24.

La conduction thermique s'opère radialement vers l'extérieur depuis le matériau abradable 24 vers l'anneau 26 portant ce dernier. La chaleur est ensuite transférée à la paroi cylindrique 12 du carter 10 qui est en appui sur l'anneau 26 par les contacts entre une face amont 12c de la paroi cylindrique 12 et la face amont 28a de la gorge annulaire 28 de l'anneau 26, entre la face radialement interne 12a de la paroi cylindrique 12 et la face annulaire de fond 28b de la gorge 28 et entre une face aval 12d de la paroi cylindrique 12 et la face aval 28c de la gorge 28. Cela mène à une augmentation de température par conduction thermique du carter 10 et de la paroi cylindrique 12 supportant le distributeur.

Le carter 10 et les moyens de support qu'il comprend peuvent ainsi atteindre une température importante susceptible de les fragiliser et de réduire la durée de vie du carter 10 qui est une pièce massive et coûteuse à réaliser. Il est donc important de trouver des solutions techniques visant à limiter les échauffements au niveau des moyens de support du carter.

### Résumé

L'invention a pour but d'apporter une solution simple, efficace et économique à ces problèmes.

A cet effet, elle propose une turbine pour une turbomachine comprenant :
- une rangée annulaire d'aubes mobiles entourée par un anneau de support d'un matériau abradable porté par un carter, l'anneau définissant une face radialement externe,
- un distributeur monté en aval de ladite rangée annulaire d'aubes mobiles et comprenant un moyen d'accrochage sur un moyen de support du carter, le dit moyen d'accrochage comportant un becquet radialement externe en appui radialement vers l'intérieur sur une face annulaire radialement externe d'une paroi cylindrique dudit moyen de support, la paroi cylindrique du moyen de support s'étendant selon une direction parallèle à l'axe de la turbine, l'anneau de support du matériau abradable étant porté par le carter par l'intermédiaire du moyen d'accrochage du distributeur, ledit moyen de support comprenant en outre une paroi annulaire s'étendant radialement vers l'intérieur depuis la paroi cylindrique et engagée à son extrémité radialement interne dans une gorge annulaire de l'anneau, et dans laquelle un espace annulaire libre est formé entre la face radialement externe de l'anneau et la paroi cylindrique du moyen de support.

La distance séparant la paroi cylindrique du matériau abradable, telle que décrit en référence à la technique antérieure, est ainsi allongée de la paroi annulaire radiale vers l'intérieur du moyen de support et de l'espace annulaire libre. Cela permet d'éloigner radialement la paroi cylindrique du moyen de support de la face radialement externe de l'anneau et de diminuer la quantité de chaleur transmise par conduction thermique par l'anneau à la paroi cylindrique du moyen de support.

Par ailleurs, la formation de cet espace libre 40 induit un allongement radial du moyen d'accrochage du distributeur 30 du fait de la disposition du moyen de support. De cette manière, la paroi cylindrique du moyen de support est moins chaude et transfère, par conduction thermique, moins de chaleur au carter par rapport à la technique antérieure.

L'espace annulaire libre s'étend avantageusement axialement entre la paroi annulaire radiale du moyen de support et une paroi tronconique du moyen d'accrochage, cette paroi tronconique étant reliée à son extrémité radialement externe au becquet radialement externe.

Cette délimitation de l'espace annulaire libre implique que la paroi annulaire du moyen de support s'étend radialement vers l'intérieur depuis l'extrémité amont de la paroi cylindrique ou depuis une position intermédiaire entre l'extrémité amont et l'extrémité aval de la paroi cylindrique. Cela permet d'éloigner axialement la paroi tronconique du moyen d'accrochage de la paroi annulaire radiale du moyen de support de manière à limiter le transfert de chaleur entre ces deux éléments.

Avantageusement, la paroi annulaire radiale du moyen de support s'étend radialement vers l'intérieur depuis une extrémité amont de la paroi cylindrique.

Cette configuration de la paroi annulaire radiale du moyen de support confère une forme compacte et simple de réalisation au moyen de support. Cela permet aussi d'adapter l'anneau de l'art antérieur en apportant une modification mineure de la gorge annulaire de l'anneau coopérant avec le moyen de support. Cette configuration permet également un éloignement axial maximal entre la paroi tronconique du moyen d'accrochage et la paroi annulaire radiale du moyen de support, limitant au maximum les transferts de chaleur entre ces deux éléments.

La turbine peut également présenter la caractéristique selon laquelle l'espace annulaire libre définit défini une distance radiale entre la face radialement externe de l'anneau et la paroi cylindrique, cette distance radiale étant au moins supérieure au double d'une profondeur radiale de la gorge annulaire de l'anneau.

Ainsi, l'écartement radial entre la surface radialement externe de l'anneau et la paroi cylindrique est assez important pour limiter le transfert de chaleur entre ces deux éléments.

Selon une autre caractéristique de l'invention, le moyen d'accrochage du distributeur comprend un becquet radialement interne relié à l'extrémité amont d'une plateforme radialement externe du distributeur, le becquet radialement interne étant en appui sur une face radialement interne de l'anneau de support du matériau abradable.

Le distributeur est ainsi maintenu par rapport à l'anneau grâce à la face radialement externe du becquet radialement interne en appui sur la face radialement interne de l'anneau. Par ailleurs, l'invention apporte des modifications géométriques extrêmement locales par rapport à la technique antérieure : le maintien du distributeur par rapport à l'anneau n'est pas modifié par rapport à la technique antérieure. Cela permet de conserver sans modifications les éléments environnants qui ne sont pas liés au problème technique résolu par la présente invention.

Selon un mode préféré de l'invention, l'espace annulaire libre s'étend sur une distance axiale entre la paroi annulaire radiale du moyen de support et la paroi tronconique du moyen d'accrochage qui est supérieure à une dimension axiale de la paroi cylindrique du moyen de support.

Selon un autre mode préféré de l'invention, l'espace annulaire libre s'étend sur une distance axiale entre la paroi annulaire radiale du moyen de support et la paroi tronconique du moyen d'accrochage qui est supérieure à une dimension axiale du becquet radialement externe du moyen d'accrochage.

Ces caractéristiques peuvent être considérées conjointement ou alternativement et avantageusement dans le but de maximiser la dimension axiale de l'espace annulaire libre de sorte que l'espacement axial entre la paroi tronconique du moyen d'accrochage et la paroi annulaire radialement vers l'intérieur du moyen de support soit suffisant pour limiter le transfert de chaleur de la paroi tronconique du moyen d'accrochage à la paroi cylindrique et la paroi annulaire vers l'intérieur du moyen de support.

Selon un aspect de l'invention la turbine décrite ci-dessus est une turbine basse pression.

L'invention concerne également une turbomachine telle qu'un turboréacteur ou un turbopropulseur d'avion comprenant une turbine telle que décrite ci-dessus.

### Brève description des dessins

D'autres caractéristiques, détails et avantages apparaîtront à la lecture de la description détaillée ci-après, et à l'analyse des dessins annexés, sur lesquels :
[Fig. 1], déjà décrite précédemment, représente une demi vue schématique partielle en coupe axiale d'une turbine basse-pression de l'art antérieur ;
[Fig. 2], déjà décrite précédemment, est une vue schématique à plus grande échelle de la zone délimitée en pointillés sur la figure 1 ;
[Fig. 3] est une vue schématique similaire à celle de la figure 2 et illustrant un mode de réalisation de l'invention.

### Description des modes de réalisation

Une turbine de turbomachine selon un mode préféré de l'invention est représentée en figure 3 et comprend des rangées annulaires d'aubes mobiles 20a disposées axialement en alternance avec des rangées annulaires d'aubes fixes 30a, également appelées distributeurs, lesdites rangées annulaires d'aubes mobiles 20a et les rangées annulaires d'aubes fixes 30a étant entourées par un carter 10 de la turbine basse pression. Le terme « annulaire » employé dans le cadre du présent document désigne des pièces s'étendant circonférentiellement, ces pièces pouvant être réalisées sous forme d'anneau ou de secteurs d'anneau agencés pour être circonférentiellement bout-à-bout. Par exemple, le distributeur peut être formé d'une pluralité de secteurs agencés circonférentiellement bout-à-bout.

De manière similaire à la technique antérieure, l'extrémité radialement externe de chaque rangée annulaire d'aubes mobiles 20a comprend des léchettes 22 coopérant à étanchéité avec un matériau abradable 24 conformé de manière annulaire et porté par la face radialement interne 26a d'un anneau 26. L'anneau 26 est de préférence sectorisé c'est-à-dire formé d'une pluralité de secteurs d'anneau disposés circonférentiellement bout-à-bout. L'anneau 26 de support du matériau abradable 24 est rendu solidaire du carter 10 grâce à un moyen de support porté par le carter 10 et un moyen d'accrochage d'un distributeur aval sur le carter 10.

Le moyen de support comprend une paroi cylindrique 12 reliée au carter 10 et s'étendant axialement vers l'aval. La paroi cylindrique 12 présente une face annulaire radialement interne 12a et une face annulaire radialement externe 12b. Le moyen de support comprend en outre une paroi annulaire 14 s'étendant radialement vers l'intérieur depuis la paroi cylindrique 12. Dans un mode préféré de l'invention tel que représenté à la figure 3, la paroi annulaire 14 s'étend radialement vers l'intérieur depuis une extrémité amont de la paroi cylindrique 12 du moyen de support. L'extrémité radialement interne de la paroi annulaire radiale 14 s'engage dans une gorge annulaire 28 de l'anneau 26. Dans l'exemple représenté en figure 3, le moyen de support présente une forme générale en « L » avec deux branches formées par la paroi cylindrique 12 et la paroi annulaire radiale 14, ou une forme générale de « T » formées par la paroi cylindrique 12, la paroi annulaire 14 et considérant un raccord 13 au carter.

La face annulaire radialement externe 26b de l'anneau 26 comprend une gorge annulaire 28 orientée radialement vers l'extérieur dans laquelle est engagée l'extrémité radialement interne de la paroi annulaire radiale 14 du moyen de support. Cette gorge annulaire 28 comprend une face annulaire amont 28a et une face annulaire aval 28c formant des butées axiales sur la face amont 14a et la face aval 14c de l'extrémité radialement interne de la paroi annulaire radiale 14 du moyen de support, permettant ainsi de bloquer axialement l'anneau 26. La face annulaire de fond 28b de la gorge annulaire 28 forme un appui radial avec la face cylindrique 14b de l'extrémité radialement interne de la paroi annulaire radiale 14, limitant le mouvement radialement vers l'extérieur de l'anneau 26 relativement au carter 10. La coopération de forme entre la paroi annulaire radiale 14 et la gorge annulaire 28 de l'anneau 26 assure également une étanchéité vis-à-vis de l'air chaud de la veine.

La chaleur transmise radialement vers l'extérieur de l'anneau 26 au moyen de support transite d'abord par la paroi annulaire radiale 14 avant d'être reçue par la paroi cylindrique 12 du fait de la conformation en « T » du moyen de support qui assure un éloignement radial de la paroi cylindrique 12 relativement à l'anneau 26. La quantité de chaleur reçue par la paroi cylindrique 12 depuis l'anneau 26 est donc réduite.

L'extrémité interne de la paroi annulaire radiale 14 engagée dans la gorge annulaire 28 de l'anneau 26 présente une dimension axiale qui est inférieure à la dimension axiale de la paroi cylindrique 12 engagée dans la gorge annulaire 28 dans le cas de la turbine de la technique antérieure. Cela résulte en une diminution de la surface d'appui radial entre l'anneau 26 et le moyen de support. Or les échanges thermiques ont lieu entre l'anneau 26 et le moyen de support à travers les surfaces d'appui. Cette diminution de la surface d'appui entre l'anneau 26 et le moyen de support favorise donc une réduction des échanges thermiques entre l'anneau 26 et le moyen de support.

Cette diminution de la dimension axiale de gorge annulaire 28 résulte en une diminution de perte de serrage de l'anneau 26 en fonctionnement au niveau des appuis entre la face amont 14a de la paroi annulaire 14 et la face annulaire amont 28a de la gorge annulaire 28 et entre la face aval 14b de la paroi annulaire 14 et la face aval 28c de la gorge annulaire 28. Cela résulte en une diminution de contraintes, améliorant ainsi la durée de vie en fatigue oligocyclique de l'anneau 26.

L'extrémité radialement externe de chaque rangée annulaire d'aubes fixes 30a comprend une plateforme annulaire externe 32 comportant un moyen d'accrochage du distributeur au moyen de support du carter 10 et d'accrochage à l'anneau 26 de support de matériau abradable 24. Ce moyen d'accrochage comprend un becquet ou une patte annulaire interne 34 s'étendant vers l'amont depuis l'extrémité amont de la plateforme 32. Dans le cas d'un distributeur formé d'une pluralité de secteurs, chaque secteur comprend un becquet interne. Le becquet annulaire interne 34 présente notamment une face annulaire radialement externe 34b. Le moyen d'accrochage du distributeur comprend en outre une paroi tronconique 36 s'étendant vers l'amont et radialement vers l'extérieur depuis la plateforme annulaire externe 32. Autrement dit, la paroi tronconique 36 présente une section contenue dans un plan axial qui augmente en allant vers l'amont. Le moyen d'accrochage comprend enfin un becquet ou patte annulaire externe 38 s'étendant vers l'amont depuis une extrémité radiale externe de la paroi tronconique 36. Dans le cas d'un distributeur formé d'une pluralité de secteurs, chaque secteur comprend un becquet externe. Le becquet annulaire externe 38 présente notamment une face annulaire radialement interne 38a.

Le distributeur est positionné par rapport au carter 10 de manière à ce que la face annulaire radialement interne 38a du becquet annulaire externe 38 du moyen d'accrochage soit en appui sur la face annulaire radialement externe 12b de la paroi cylindrique 12 du moyen de support. Le distributeur est également maintenu par rapport à l'anneau 26 par la face annulaire radialement externe 34b du becquet annulaire interne 34 du moyen d'accrochage qui est en appui sur la face radialement interne 26a de l'anneau 26.

Un espace annulaire libre 40 est formé entre la paroi cylindrique 12 du moyen de support et une face radialement externe 26b de l'anneau 26. L'espace annulaire libre 40 est dépourvu de tout élément solide conducteur de chaleur, notamment de tout élément de fixation. De cette manière, la face radialement interne 12a de la paroi cylindrique 12 est agencée en vis-à-vis radial directement de la face radialement externe 26b de l'anneau 26. L'espace annulaire libre 40 s'étend radialement entre la face radialement externe 26b de l'anneau 26 et la face annulaire radialement interne 12a de la paroi cylindrique 12. La distance radiale entre la face externe 26b de l'anneau 26 et la face annulaire radialement interne 12a de la paroi cylindrique 12 est au moins supérieure à une profondeur radiale de la gorge annulaire 28 de l'anneau 26. Avantageusement, la distance radiale entre la face externe 26b de l'anneau 26 et la face annulaire radialement interne 12a de la paroi cylindrique 12 est au moins supérieure au double de la profondeur radiale de la gorge annulaire 28 de l'anneau 26. La paroi cylindrique 12 du moyen de support est ainsi éloignée radialement de la face radialement externe 26b de l'anneau 26 par rapport à la technique antérieure.

Comme représenté en figure 3, l'espace annulaire libre 40 peut s'étendre axialement entre la paroi annulaire radiale 14 du moyen de support et la paroi tronconique 36 du moyen d'accrochage. Pour cela, la paroi annulaire radiale 14 du moyen de support peut s'étendre depuis l'extrémité amont de la paroi cylindrique 12 ou depuis une position intermédiaire entre l'extrémité amont et l'extrémité aval de la paroi cylindrique 12. Cela permet d'éloigner axialement la paroi annulaire radiale 14 et la paroi tronconique 36, limitant ainsi le transfert de chaleur entre ces deux éléments.

L'espace annulaire est ainsi délimité radialement par la face radialement externe de 26b de l'anneau 26 et la face radialement interne 12a de la paroi cylindrique12 et il est délimité axialement par la face amont 14c de la paroi annulaire radiale 14 et la face amont 36a de la paroi tronconique 36 du moyen d'accrochage. L'espace annulaire contient un volume d'air chaud dont l'écoulement est considéré statique. Cela permet de réduire les échanges de chaleur par convection thermique grâce à une réduction des coefficients d'échanges de chaleur entre l'air chaud contenu dans l'espace annulaire 40 avec la face radialement interne 12a la paroi cylindrique 12, la face aval 14c de la paroi annulaire radiale 14 du moyen de support, la face radialement externe 26b l'anneau 26 et la face radialement interne 38a du becquet annulaire externe 38 du moyen d'accrochage.

Dans la réalisation pratique représentée en figure 3, la paroi annulaire radiale 14 s'étend depuis l'extrémité amont de la paroi cylindrique 12 pour que la distance axiale soit maximale entre la paroi annulaire radiale 14 et la paroi tronconique 36, limitant au maximum le transfert de chaleur entre ces éléments.

Selon un mode de réalisation préféré de l'invention, on choisira une distance axiale entre la paroi annulaire radiale 14 du moyen de support et la paroi tronconique 36 du moyen d'accrochage qui est supérieure à la dimension axiale de la paroi cylindrique 12.

Selon un autre mode de réalisation préféré de l'invention pouvant être indépendant ou être associé au précédent, on choisira une distance axiale entre la paroi annulaire radiale 14 du moyen de support et la paroi tronconique 36 du moyen d'accrochage qui est supérieure à une dimension axiale du becquet annulaire externe 38 du moyen d'accrochage.

Ces deux modes préférés de l'invention permettent un espacement axial suffisant entre la paroi annulaire radiale 14 et la paroi tronconique 36 pour limiter de manière optimale le transfert de chaleur entre ces deux éléments.

La présence de l'espace annulaire libre 40 implique également que la distance radiale entre la face radialement interne 26a de l'anneau 26 et la face annulaire radialement externe 12b de la paroi cylindrique 12 est supérieure à la même distance axiale entre ces deux mêmes faces de la technique antérieure. Ainsi, la dimension radiale de la paroi tronconique 36 est augmentée par rapport à la technique antérieure pour augmenter l'espacement radial entre le becquet annulaire interne 34 et le becquet annulaire externe 38. De cette manière, les appuis du moyen d'accrochage du distributeur sur le moyen de support et sur l'anneau 26 sont avantageusement conservés.

Une tôle 42 de protection thermique est positionnée entre le becquet annulaire externe 38 du moyen de support et le carter 10. La tôle est au moins maintenue en appui sur une face radialement externe 38b du becquet annulaire externe 38. Cette tôle permet de réduire le transfert de chaleur depuis le becquet annulaire externe 38 vers le carter 10.

La conduction thermique s'opère radialement vers l'extérieur depuis le matériau abradable 24 chauffé par les gaz chauds circulant dans la veine vers l'anneau 26 supportant ce dernier. La chaleur est ensuite transférée à la paroi annulaire radiale 14 du moyen de support qui est en contact avec l'anneau 26 par les contacts suivants, à savoir le contact entre la face amont 14a de la paroi annulaire radiale 14 et la face amont 28a de la gorge, le contact entre la face radialement interne 14b de la paroi annulaire radiale 14 et la face de fond 28b de la gorge et le contact entre la face aval 14c de la paroi annulaire radiale 14 et la face aval 28c de la gorge. La paroi annulaire radiale 14 transfère enfin la chaleur à la paroi cylindrique 12 du moyen de support et au carter 10. Par conséquent, la distance séparant le matériau abradable 24 de la paroi cylindrique 12 est allongé de la paroi annulaire radiale 14 par rapport à la technique antérieure, ce qui limite la quantité de chaleur reçue par la paroi cylindrique 12 du moyen de support.

L'espace annulaire libre 40 formé entre la paroi cylindrique 12 du moyen de support et l'anneau 26 permet aussi de limiter le flux de chaleur transmis par l'anneau 26 à la paroi cylindrique 12 du moyen de support en ce que l'air est moins bon conducteur thermique que les pièces métalliques constituant généralement les différents éléments de la turbine et du carter 10.

Moyennant ces effets, la paroi cylindrique 12 du moyen de support reçoit moins de chaleur et est donc moins chaude. Cela permet d'augmenter la durée de vie du carter 10 et de la paroi cylindrique 12 et réduisant les frais de maintenance.

## Revendications

1. Turbine pour une turbomachine comprenant :
- une rangée annulaire d'aubes mobiles (20a) entourée par un anneau (26) de support d'un matériau abradable (24) porté par un carter (10), l'anneau (26) définissant une face radialement externe (26b),
- un distributeur monté en aval de ladite rangée annulaire d'aubes mobiles (20a) et comprenant un moyen d'accrochage sur un moyen de support du carter (10), le dit moyen d'accrochage comportant un becquet radialement externe (38) en appui radialement vers l'intérieur sur une face annulaire radialement externe (12b) d'une paroi cylindrique (12) dudit moyen de support, la paroi cylindrique (12) du moyen de support s'étendant selon une direction parallèle à l'axe de la turbine, l'anneau de support du matériau abradable étant porté par le carter (10) par l'intermédiaire du moyen d'accrochage du distributeur,
**caractérisé en ce que**
ledit moyen de support comprend en outre une paroi annulaire (14) s'étendant radialement vers l'intérieur depuis la paroi cylindrique (12) et engagée à son extrémité radialement interne dans une gorge annulaire (28) de l'anneau (26), et un espace annulaire libre (40) est formé entre la face radialement externe (26b) de l'anneau (26) et la paroi cylindrique (12) du moyen de support.

2. Turbine selon la revendication 1, dans laquelle l'espace annulaire libre (40) s'étend axialement entre la paroi annulaire radiale (14) du moyen de support et une paroi tronconique (36) du moyen d'accrochage, cette paroi tronconique (36) étant reliée à son extrémité radialement externe au becquet radialement externe (38).

3. Turbine selon la revendication 1 ou 2, dans laquelle la paroi annulaire radiale (14) du moyen de support s'étend radialement vers l'intérieur depuis une extrémité amont de la paroi cylindrique (12).

4. Turbine selon l'une des revendications 1 à 3, dans laquelle l'espace annulaire libre (40) définit une distance radiale entre la face radialement externe (26b) de l'anneau (26) et la paroi cylindrique (12), cette distance radiale étant au moins supérieure au double d'une profondeur radiale de la gorge annulaire (28) de l'anneau (26).

5. Turbine selon l'une des revendications 1 à 4, dans laquelle le moyen d'accrochage du distributeur comprend un becquet radialement interne (34) relié à l'extrémité amont d'une plateforme (32) radialement externe du distributeur, le becquet radialement interne (34) étant en appui sur une face radialement interne (26a) de l'anneau (26) de support abradable (24).

6. Turbine selon l'une des revendications 2 à 5, dans laquelle l'espace annulaire libre (40) s'étend sur une distance axiale entre la paroi annulaire radiale (14) du moyen de support et la paroi tronconique (36) du moyen d'accrochage qui est supérieure à une dimension axiale de la paroi cylindrique (12) du moyen de support.

7. Turbine selon l'une des revendications 2 à 5, dans laquelle l'espace annulaire libre (40) s'étend sur une distance axiale entre la paroi annulaire radiale (14) du moyen de support et la paroi tronconique (36) du moyen d'accrochage qui est supérieure à une dimension axiale du becquet radialement externe (38) du moyen d'accrochage.

8. Turbine selon l'une des revendications 1 à 7, la turbine étant une turbine basse pression.

9. Turbomachine telle qu'un turboréacteur ou un turbopropulseur d'avion comprenant une turbine selon l'une des revendications 1 à 8.

## Patentansprüche

1. Turbine für ein Turbotriebwerk, enthaltend:
- eine ringförmige Aneinanderreihung von Laufschaufeln (20a), die von einem aus einem Abriebsmaterial (24) bestehenden Stützring (26) umgeben ist, der von einem Gehäuse (10) abgestützt wird, wobei der Ring (26) eine radial äußere Fläche (26b) definiert,
- einen Leitapparat, der stromabwärts der ringförmigen Aneinanderreihung von Laufschaufeln (20a) angebracht ist und ein Einrastmittel zum Einrasten an einem Stützmittel des Gehäuses (10) umfasst, wobei das Einrastmittel eine radial äußere Nase (38) umfasst, die radial nach innen an einer ringförmigen, radial äußeren Fläche (12b) einer zylindrischen Wand (12) des Stützmittels anliegt, wobei die zylindrische Wand (12) des Stützmittels sich in einer Richtung parallel zur Turbinenachse erstreckt, wobei der Stützring aus Abriebsmaterial über das Einrastmittel des Leitapparats von dem Gehäuse abgestützt wird,
**dadurch gekennzeichnet, dass** das Stützmittel ferner eine ringförmige Wand (14) umfasst, die sich von der zylindrischen Wand (12) radial nach innen erstreckt und an ihrem radial inneren Ende in eine ringförmige Nut (28) des Rings (26) eingreift, und ein ringförmiger Freiraum (40) zwischen der radial äußeren Fläche (26b) des Rings (26) und der zylindrischen Wand (12) des Stützmittels gebildet ist.

2. Turbine nach Anspruch 1,
wobei sich der ringförmige Freiraum (40) axial zwischen der ringförmigen radialen Wand (14) des Stützmittels und einer kegelstumpfförmigen Wand (36) des Einrastmittels erstreckt, wobei diese kegelstumpfförmige Wand (36) an ihrem radial äußeren Ende mit der radial äußeren Nase (38) verbunden ist.

3. Turbine nach Anspruch 1 oder 2,
wobei sich die ringförmige radiale Wand (14) des Stützmittels von einem stromaufwärtigen Ende der zylindrischen Wand (12) radial nach innen erstreckt.

4. Turbine nach einem der Ansprüche 1 bis 3,
wobei der ringförmige Freiraum (40) einen radialen Abstand zwischen der radial äußeren Fläche (26b) des Rings (26) und der zylindrischen Wand (12) definiert, wobei dieser radiale Abstand mindestens größer ist als das Zweifache einer radialen Tiefe der ringförmigen Nut (28) des Rings (26).

5. Turbine nach einem der Ansprüche 1 bis 4,
wobei das Einrastmittel des Leitapparats eine radial innere Nase (34) umfasst, die mit dem stromaufwärtigen Ende einer radial äußeren Plattform (32) des Leitapparats verbunden ist, wobei die radial innere Nase (34) auf einer radial inneren Fläche (26a) des Stützrings (26) aus Abriebsmaterial (24) aufliegt.

6. Turbine nach einem der Ansprüche 2 bis 5,
wobei sich der ringförmige Freiraum (40) über einen axialen Abstand zwischen der ringförmigen radialen Wand (14) des Stützmittels und der kegelstumpfförmigen Wand (36) des Einrastmittels erstreckt, der größer ist als eine axiale Abmessung der zylindrischen Wand (12) des Stützmittels.

7. Turbine nach einem der Ansprüche 2 bis 5,
wobei sich der ringförmige Freiraum (40) über einen axialen Abstand zwischen der ringförmigen radialen Wand (14) des Stützmittels und der kegelstumpfförmigen Wand (36) des Einrastmittels erstreckt, der größer ist als eine axiale Abmessung der radial äußeren Nase (38) des Einrastmittels.

8. Turbine nach einem der Ansprüche 1 bis 7,
wobei die Turbine eine Niederdruckturbine ist.

9. Turbotriebwerk, wie Turbostrahltriebwerk oder Turboprop-Triebwerk für Flugzeuge mit einer Turbine nach einem der Ansprüche 1 bis 8.

## Claims

1. A turbine for a turbomachine comprising:
- an annular row (20) of moving blades (20a) surrounded by a support ring (26) of an abradable material (24) carried by a housing (10), the ring (26) defining a radially outer face (26b),
- a distributor (30) mounted downstream of the said annular row (20) of moving blades (20a) and comprising a means of attachment to a means of supporting the housing (10), the said means of attachment comprising a radially outer spoiler (38) coming to bear radially inwards on a radially outer annular face (12b) of a cylindrical wall of said means of support, the cylindrical wall of the means of support extends in a direction parallel to the turbine axis, the abradable material support ring being carried by the housing via the means of attachment of the distributor, the said means of support further comprising an annular wall (14) extending radially inwards from the cylindrical wall (12) and engaged at its radially inner end in an annular groove (28) of the ring (26), and in which a free annular space (40) is formed between a radially outer face (26b) of the ring (26) and the cylindrical wall (12) of the means of support.

2. A turbine according to claim 1, wherein the free annular space (40) extends axially between the radial annular wall (14) of the means of support and a frusto-conical wall (36) of the means of attachment, this frusto-conical wall (36) being connected at its radially outer end to the radially outer spoiler (38).

3. A turbine according to claim 1 or 2, wherein the radial annular wall (14) of the means of support extends radially inwards from an upstream end of the cylindrical wall (12).

4. A turbine according to any one of claims 1 to 3, wherein the free annular space (40) defines a radial distance between the radially outer face (26b) of the ring (26) and the cylindrical wall (12), which radial distance is at least greater than twice a radial depth of the annular groove (28) of the ring (26).

5. A turbine according to one of claims 1 to 4, in which the means of attachment of the distributor (30) comprises a radially inner spoiler (34) connected to the upstream end of a radially outer platform (32) of the distributor (30), the radially inner spoiler (34) coming to bear on a radially inner face (26a) of the ring (26) of abradable support (24).

6. A turbine according to any one of claims 2 to 5, wherein the free annular space (40) extends over an axial distance between the radial annular wall (14) of the means of support and the frusto-conical wall (36) of the means of attachment which is greater than an axial dimension of the cylindrical wall (12) of the means of support.

7. A turbine according to any one of claims 2 to 5, wherein the free annular space (40) extends over an axial distance between the radial annular wall (14) of the means of support and the frusto-conical wall (36) of the means of attachment which is greater than an axial dimension of the radially outer spoiler (38) of the means of attachment.

8. A turbine according to any of claims 1 to 7, the turbine being a lowpressure turbine.

9. A turbomachine such as a turbojet or aircraft turboprop engine comprising a turbine according to any of claims 1 to 8.
